# FASCICULE DE BREVET EUROPEEN

(11) **EP 4 417 399 B1**
(45) Date de publication et mention de la délivrance du brevet: **10.06.2026**
(21) Numéro de dépôt: 24155803.0
(22) Date de dépôt: 05.02.2024
(51) Int. Cl.: B29C 65/18, B29C 65/26, B29C 65/74, B29C 65/00, B29C 65/30, B29L 31/00

(54) **MACHINE D'OPERCULAGE ET PROCÉDÉ D'OPERCULAGE**
DECKELVERSCHLIESSMASCHINE UND DECKELVERFAHREN
LIDDING MACHINE AND LIDDING METHOD

(30) Priorité: 14.02.2023 FR 2301347
(43) Date de publication de la demande: 21.08.2024
(73) Titulaire: Guelt, 29300 Quimperle (FR)
(72) Inventeur: KERNEN, Samuel, 29300 Quimperle (FR); GUEGAN, Stéphane, 29300 Quimperle (FR)
(74) Mandataire: Novagraaf Technologies

(56) Documents cités:
- WO-A1-2016/055598
- US-A1- 2003 219 515

## Description

### Domaine technique de l'invention

La présente invention concerne l'operculage de contenants qui consiste à sceller thermiquement un film sur un contenant, en particulier pour un emballage de type « skin packaging » (défini ci-après) ou sous atmosphère modifiée de produits notamment alimentaires. Classiquement, l'operculage est mis en œuvre par une machine d'operculage ou par une machine de thermoformage. La machine de thermoformage permet le thermoformage, l'operculage et la découpe de contenants.

L'invention concerne plus particulièrement une machine d'operculage ou de thermoformage et un procédé d'operculage. Dans l'ensemble du texte, l'expression « machine d'operculage » couvre l'ensemble des machines d'operculage simple et des machines de thermoformage.

### Arrière-plan technique

Classiquement, une machine d'operculage de contenants comprend une enceinte comportant une cloche supérieure et une cloche inférieure agencées pour être déplacées verticalement l'une par rapport à l'autre entre une position ouverte permettant la mise en place du contenant dans la cloche inférieure et la mise en place du film d'operculage entre la cloche inférieure et la cloche supérieure, et une position fermée permettant l'operculage.

Une telle machine d'operculage comprend également une tête de scellage montée dans la cloche supérieure. La tête de scellage comporte un élément presseur comprenant une surface d'appui agencée pour plaquer le film d'operculage sur un bord du contenant dans la position fermée de l'enceinte. En outre, la tête de scellage comporte un bloc de chauffe qui est utilisé de différentes manières suivant le type d'operculage souhaité.

Un premier type d'operculage concerne l'operculage selon une technologie communément désignée sous l'appellation anglosaxonne de « skin packaging », le film d'operculage est plaqué sur le contenant et le produit qu'il contient afin d'épouser la forme du produit, telle une seconde peau. Pour ce faire, le film est placé sous le bloc de chauffe porté à une température prédéterminée pour ramollir le film et permettre ainsi sa déformation, puis, une dépression dans la cloche inférieure permet de plaquer le film sur le produit, le film épousant ainsi parfaitement la forme du produit.

Un deuxième type d'operculage concerne l'operculage sous atmosphère modifiée qui comprend l'operculage sous vide standard. Dans ce cas, le contenant et le produit qu'il contient sont placés dans l'enceinte. Une fois en position fermée, l'enceinte est mise sous atmosphère modifiée pour permettre une meilleure conservation du produit. Ensuite, le film est placé sur le contenant et le produit puis est scellé sur le bord du contenant par une soudure thermique.

Ainsi, pour le premier type d'operculage, le bloc de chauffe est destiné à chauffer le film sur une surface sensiblement égale à la surface du contenant dans un plan horizontal tandis que pour le second type d'operculage, le bloc de chauffe est destiné à chauffer le film uniquement le long du cordon de soudure.

Classiquement, ces deux types d'operculage sont réalisés par des machines différentes car jusqu'alors, la configuration de chauffe requise pour un operculage de type « skin packaging » excluait la configuration de chauffe permettant l'operculage sous atmosphère modifiée. En effet, dans une configuration de chauffe permettant l'operculage sous atmosphère modifiée, le bloc de chauffe est porté à très haute température lors de l'opération de soudure et peut endommager le film si ce dernier se trouve à proximité du bloc de chauffe ce qui est requis dans une configuration de chauffe permettant l'operculage de type « skin packaging ». En particulier, le film endommagé pourrait être déformé voire déchiré et le contenant pourrait être déformé également.

Or un même atelier de conditionnement peut être amené à réaliser les deux types d'operculage. Dans un objectif de réduction du coût des équipements, une machine d'operculage polyvalente permettant de réaliser les deux types d'operculage, de type « skin packaging » et sous atmosphère modifiée est alors avantageuse.

L'invention propose une solution visant à pallier les inconvénients précités. Un objectif de l'invention est de proposer une machine et un procédé d'operculage polyvalents. Les documents US2003/219515 A1 et WO 2016/055598 A1 donnent des exemples de machines d'operculage.

### Résumé de l'invention

L'invention propose une machine d'operculage de contenants permettant de sceller thermiquement un film d'operculage sur un contenant, en particulier pour un emballage de type « skin packaging » ou sous atmosphère modifiée de produits notamment alimentaires, la machine d'operculage comprenant :
- une enceinte comportant une cloche supérieure et une cloche inférieure agencées pour être déplacées selon un axe principal vertical l'une par rapport à l'autre entre une position ouverte permettant la mise en place du contenant dans la cloche inférieure et la mise en place du film entre la cloche inférieure et la cloche supérieure, et une position fermée permettant l'operculage,
- une tête de scellage montée dans la cloche supérieure et comportant un élément presseur comprenant une surface d'appui agencée pour plaquer le film sur un bord du contenant dans la position fermée de l'enceinte, un bloc de chauffe agencé pour chauffer l'élément presseur et une pièce intermédiaire montée à l'interface entre le bloc de chauffe et l'intérieur de l'enceinte,
la machine étant caractérisée en ce que la tête de scellage comporte des plots d'entretoise fixant la pièce intermédiaire sur la tête de scellage de manière à ménager un espace occupé par un élément d'isolation thermique entre le bloc de chauffe et la pièce intermédiaire.

Selon d'autres caractéristiques de l'invention :
- l'élément d'isolation thermique est une lame d'air ;
- la lame d'air comprend un espace principal s'étendant radialement, l'espace principal étant délimité en partie supérieure par une face inférieure du bloc de chauffe, en partie inférieure par une face supérieure de la pièce intermédiaire et latéralement par une face interne de l'élément presseur ;
- la lame d'air comprend un espace périphérique délimité latéralement par une surface axiale interne de l'élément presseur et une surface axiale externe de la pièce intermédiaire ;
- l'espace périphérique comprend un amincissement à proximité de la surface d'appui de l'élément presseur ;
- la pièce intermédiaire comporte, au voisinage de la surface d'appui, une excroissance qui comble au moins en partie l'espace périphérique autour de l'élément presseur, réalisant ainsi l'amincissement ;
- l'excroissance est de forme tronconique et s'évase progressivement vers le bas jusqu'à jouxter la surface d'appui ;
- la pièce intermédiaire comporte un dispositif de chauffe ou un dispositif de refroidissement tel qu'un réseau de circulation de fluide caloporteur ;
- la machine comporte un premier dispositif de régulation de température dans la pièce intermédiaire comprenant une première sonde de température dans la pièce intermédiaire ;
- la machine comporte un deuxième dispositif de régulation de température dans le bloc de chauffe comprenant une sonde de température dans le bloc de chauffe.

L'invention concerne également un procédé d'operculage au moyen d'une machine d'operculage selon l'invention, le procédé étant caractérisé en ce qu'il comporte les étapes suivantes :
- régulation en température de la pièce intermédiaire au moyen du premier dispositif de régulation de température,
- régulation en température du bloc de chauffe à une température différente de la température de la pièce intermédiaire au moyen du deuxième dispositif de régulation en température,
- mise en place du contenant dans la cloche inférieure,
- fermeture de l'enceinte, le film étant pincé entre la cloche supérieure et la cloche inférieure,
- création dans l'enceinte d'une atmosphère prédéterminée pour l'operculage,
- abaissement de la tête de scellage et scellage du film sur le contenant,
- remise à la pression atmosphérique de l'enceinte,
- remontée de la tête de scellage,
- ouverture de l'enceinte,
- retrait du contenant de la cloche inférieure.

Le terme d'operculage est utilisé comme synonyme du terme de thermoscellage qui correspond à l'opération consistant à souder un opercule pour fermer un contenant.

Les termes « supérieur » et « inférieur » sont employés afin de positionner les outillages d'un même poste l'un par rapport à l'autre. Il est entendu que pour chaque outillage, l'homme du métier peut inverser un outillage supérieur et un outillage inférieur sans sortir du cadre de l'invention. En particulier, l'homme du métier peut renverser la machine, tous les outillages inférieurs se retrouvant alors en haut et les outillages supérieurs en bas, sans sortir du cadre de l'invention.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] est une vue d'ensemble schématique en coupe transversale d'une machine selon un premier mode de réalisation de l'invention ;
[Fig.2] est une vue schématique en coupe longitudinale d'une enceinte de la machine de la figure 1 au cours d'un operculage sous atmosphère modifiée ;
[Fig.3] est une vue schématique en coupe longitudinale, à échelle agrandie, du détail A dans la figure 2, montrant la tête de scellage de la machine dans une position haute de repos ;
[Fig.4] est une vue schématique en coupe longitudinale, à échelle agrandie, montrant la tête de scellage de la machine dans une position basse de scellage ;
[Fig.5] est une vue schématique en coupe longitudinale de l'enceinte de la machine de la figure 1 au cours d'un operculage de type « skin packaging » ;
[Fig.6] est une vue schématique en coupe longitudinale d'une enceinte d'une machine selon un deuxième mode de réalisation de l'invention au cours d'un operculage de type « skin packaging ».

### Description détaillée de l'invention

Pour la description de l'invention et la compréhension des revendications, on adoptera à titre non limitatif et sans référence limitative à la gravité terrestre les orientations verticale, longitudinale et transversale selon le repère V, L, T indiqué aux figures dont les axes longitudinal L et transversal T s'étendent dans un plan horizontal. Par convention, l'axe vertical est orienté du bas vers le haut, l'axe longitudinal L est orienté de l'arrière vers l'avant et l'axe transversal T est orienté de la gauche vers la droite.

Dans la description qui va suivre, des éléments identiques, similaires ou analogues seront désignés par les mêmes chiffres de référence.

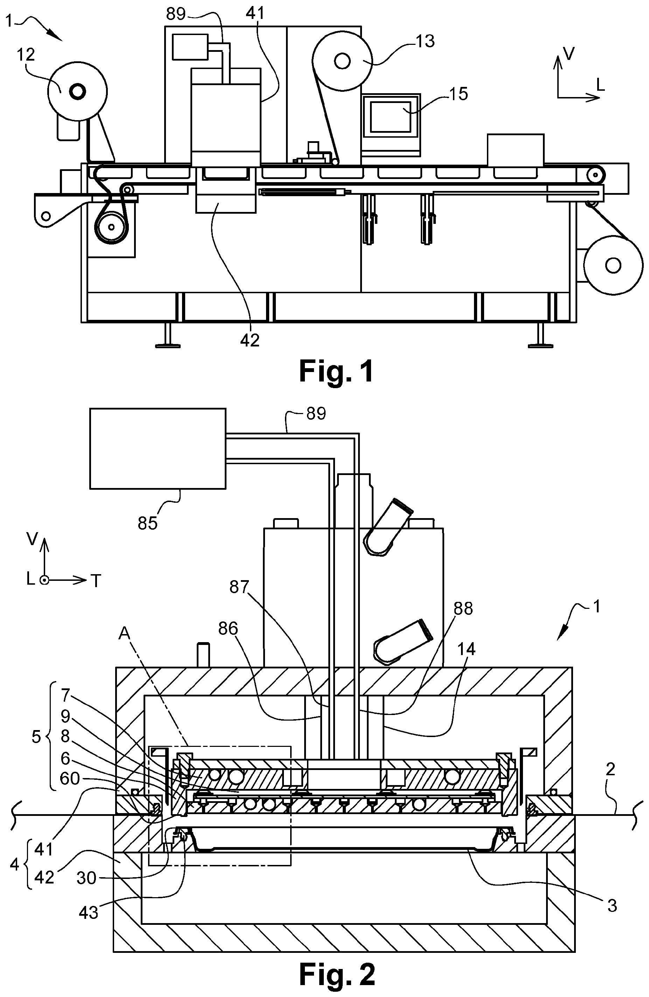

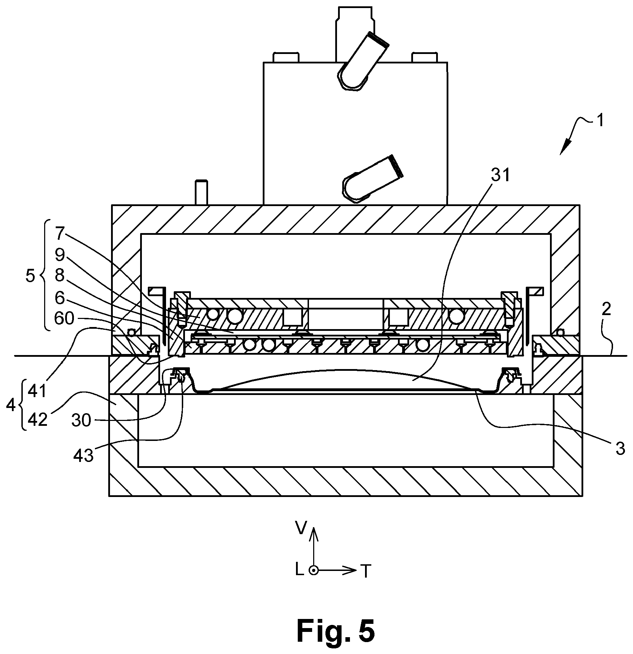

Les figures 1 à 5 illustrent une machine 1 d'operculage selon un premier mode de réalisation de l'invention permettant l'operculage de contenants 3 comprenant un produit 31 non-dépassant. « Non-dépassant » signifie que la hauteur du produit est inférieure à la hauteur du contenant. La machine 1 d'operculage est polyvalente est permet de réaliser :
- un operculage sous atmosphère modifiée comme représenté aux figures 2 à 4, ou
- un operculage de type « skin packaging » comme représenté à la figure 5.

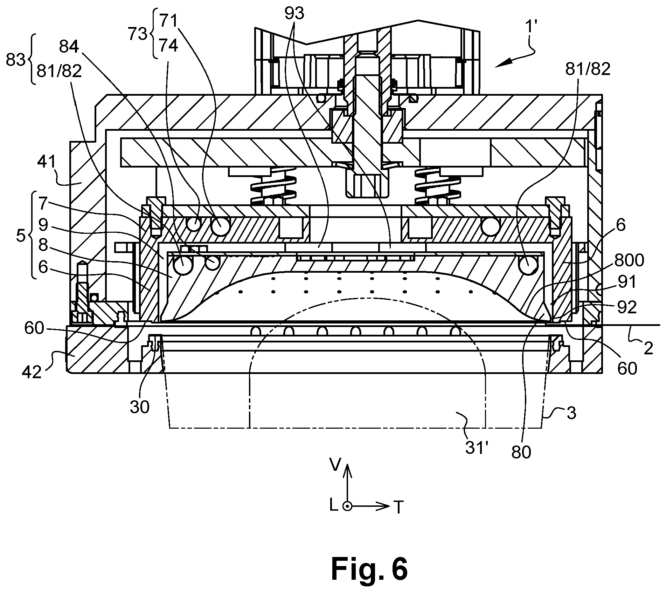

La figure 6 illustre une machine 1' d'operculage selon un deuxième mode de réalisation de l'invention permettant l'operculage de contenants 3 comprenant un produit 31' dépassant. « Dépassant » signifie que la hauteur du produit est supérieure à la hauteur du contenant 3.

Dans un premier temps, les caractéristiques communes aux machines 1 et 1' sont décrites.

La machine 1, 1' d'operculage permet de sceller thermiquement un film 2 d'operculage sur un contenant 3. A titre illustratif, le contenant peut être produit par la machine de thermoformage ou par un autre moyen.

Le contenant 3 est par exemple une barquette en matière plastique, en carton, en verre, en inox ou en toute autre matière. A titre illustratif et nullement limitatif, le contenant 3 présente une forme générale parallélépipédique et comporte une base rectangulaire depuis laquelle s'élève une paroi latérale. La paroi latérale est terminée en partie supérieure par un bord 30 de scellage rectangulaire destiné à recevoir un opercule.

En variantes, le contenant 3 peut être de toute autre forme, par exemple cylindrique ou de forme oblongue.

Le contenant 3 est destiné à recevoir un produit 31, 31' par exemple alimentaire avant l'opération d'operculage. L'operculage peut être réalisé sous vide ou sous atmosphère modifiée.

La machine 1, 1' comporte une enceinte 4. L'enceinte 4 comporte une cloche supérieure 41 et une cloche inférieure 42. La cloche supérieure 41 et la cloche inférieure 42 sont agencées pour être déplacées verticalement l'une par rapport à l'autre entre une position ouverte et une position fermée de l'enceinte 4.

Dans les exemples représentés, la cloche supérieure 41 est montée mobile en translation selon un axe principal vertical sur le châssis de la machine 1, 1' et la cloche inférieure 42 est fixe. Le dispositif comporte des moyens de déplacement (non représentés) de la cloche supérieure 41 agencés pour déplacer la cloche supérieure 41 entre une position haute correspondant à la position ouverte et une position basse correspondant à la position fermée de l'enceinte 4.

La position ouverte permet la mise en place du contenant 3 dans la cloche inférieure 42 et la mise en place du film 2 entre la cloche inférieure 42 et la cloche supérieure 41. En position ouverte, le film 2 est plaqué contre le bord inférieur de la cloche supérieure 41.

Le film d'operculage 2 provient d'une première bobine 12 et est engagé sur des moyens de guidage, non représentés. A la sortie de l'enceinte, le film d'operculage 2 résiduel est récupéré sur une seconde bobine 13. La seconde bobine peut être motorisée pour permettre le déroulement automatisé du film d'operculage 2.

Dans la position fermée, les bords en regard respectivement de la cloche supérieure 41 et de la cloche inférieure 42 sont appliqués l'un contre l'autre. La cloche supérieure 41 et la cloche inférieure 42 délimitent ainsi par leurs faces internes un espace clos hermétiquement permettant la mise sous atmosphère modifiée ou sous vide de l'enceinte 4. En position fermée, le film 2 est pincé à l'interface entre la cloche supérieure 41 et la cloche inférieure 42.

La machine 1, 1' comporte en outre une tête de scellage 5 montée dans la cloche supérieure 41. La tête de scellage 5 comporte un élément presseur 6, un bloc de chauffe 7 et une pièce intermédiaire 8 montée à l'interface entre le bloc de chauffe 7 et l'intérieur de l'enceinte 4.

La tête de scellage 5 est montée dans la cloche supérieure 41. La tête de scellage est mobile par rapport à la cloche supérieure 41 entre une position haute de repos et une position basse de scellage.

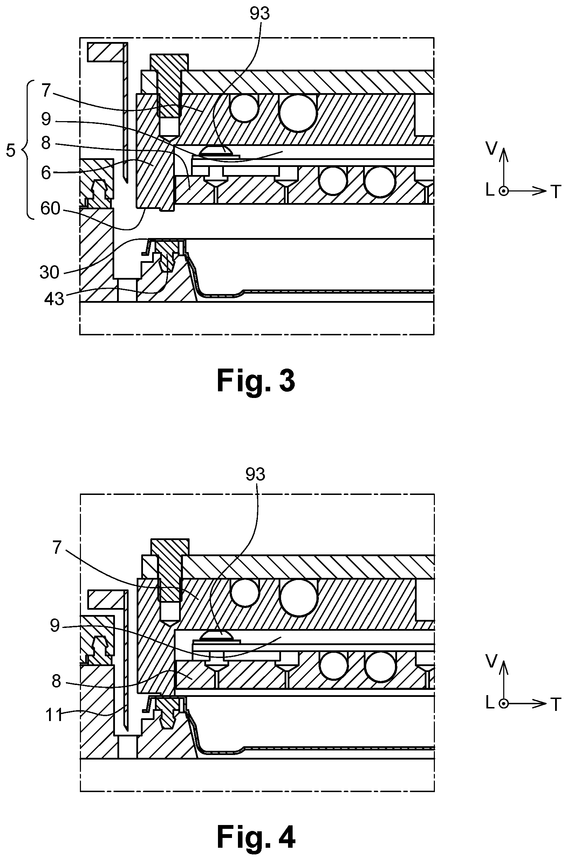

La figure 3 montre la tête de scellage 5 de la machine 1 dans une position haute de repos.

La figure 4 montre la tête de scellage 5 de la machine 1 dans une position basse de scellage.

La cloche supérieure 41 comporte un vérin de chauffe 14 déplaçant la tête de scellage entre la position haute de repos et la position basse de scellage.

L'élément presseur 6 comprend une surface d'appui 60 agencée pour plaquer le film 2 suivant un axe vertical sur le bord de scellage 30 du contenant 3 dans la position fermée de l'enceinte 4. L'élément presseur 6 présente une surface d'appui 60 correspondant à la forme du bord de scellage 30.

Dans les exemples représentés, l'élément presseur 6 est un bord inférieur du bloc de chauffe 7.

Le bloc de chauffe 7 est agencé pour chauffer l'élément presseur 6.

Le bloc de chauffe 7 est métallique. Le bloc de chauffe 7 est porté à une température de consigne par une source de chaleur. Le bloc de chauffe 7 est monté sur une surface inférieure du vérin de chauffe 14 par l'intermédiaire d'une plaque de fixation.

La pièce intermédiaire 8 est montée horizontalement sous le bloc de chauffe 7 par l'intermédiaire de plots d'entretoise 93. La pièce intermédiaire 8 est adjacente à l'élément presseur 6 en position de scellage. La pièce intermédiaire 8 comporte une face inférieure pleine délimitée par une boucle fermée ayant la forme du bord de scellage. La pièce intermédiaire 8 est située immédiatement au-dessus du film d'operculage 2.

Selon une particularité de l'invention, la tête de scellage 5 comporte un espace occupé par un élément d'isolation thermique et ménagé entre le bloc de chauffe 7 et la pièce intermédiaire 8. Les plots d'entretoise 93 de la pièce intermédiaire 8 sont dimensionnés pour optimiser l'élément d'isolation thermique afin de permettre une bonne isolation thermique tout en permettant une fixation robuste et un encombrement limité.

Dans les exemples représentés, l'élément d'isolation thermique est une lame d'air 9. En variante, l'élément d'isolation thermique peut être un élément isolant en céramique, en mica, en téflon, en silicone ou en caoutchouc.

La lame d'air 9 comprend un espace principal s'étendant radialement, l'espace principal étant délimité en partie supérieure par une face inférieure du bloc de chauffe 7, en partie inférieure par une face supérieure de la pièce intermédiaire 8 et latéralement par une face interne de l'élément presseur 6.

A titre indicatif, la lame d'air présente une épaisseur axiale de l'ordre de 5 millimètres et est comprise entre 2 millimètres et 10 millimètres.

La lame d'air 9 comprend un espace périphérique 91 délimité latéralement par une surface axiale interne de l'élément presseur 6 et une surface axiale externe de la pièce intermédiaire 8.

La pièce intermédiaire 8 comporte un dispositif de chauffe 81 et un dispositif de refroidissement 82.

Dans l'exemple représenté, le dispositif de chauffe 81 et le dispositif de refroidissement 82 comportent un réseau de circulation 89 de fluide caloporteur.

Le réseau de circulation 89 de fluide caloporteur est alimenté par un dispositif d'alimentation 85 en fluide caloporteur comportant une réserve de fluide caloporteur, une pompe de mise en circulation du fluide, un moyen de chauffage ou de refroidissement du fluide caloporteur.

Le réseau de circulation 89 de fluide caloporteur comporte une colonne de circulation 86 destinée à acheminer un fluide caloporteur jusqu'à la pièce intermédiaire 8. Dans l'exemple, le fluide caloporteur est de l'eau mais d'autres fluides caloporteurs tels que de l'huile ou des gaz peuvent être employés.

La colonne de circulation 86 est montée à l'intérieur de la cloche supérieure 41. La colonne de circulation 86 comporte une conduite d'amenée 87 de fluide et une conduite d'évacuation 88 de fluide caloporteur.

La pièce intermédiaire 8 comporte un passage de raccordement réalisant une connexion fluidique entre la conduite d'amenée 87 et la conduite d'évacuation 88. La pièce intermédiaire 8 comporte des canalisations la sillonnant permettant la circulation du fluide caloporteur. Les canalisations sont raccordées d'une part à la conduite d'amenée 87 et d'autre part à la conduite d'évacuation 88.

En variante, le dispositif de chauffe 81 est une résistance chauffante.

La machine 1, 1' comporte un premier dispositif de régulation de température 83 dans la pièce intermédiaire 8 comprenant une première sonde de température 84 dans la pièce intermédiaire 8. Une unité de contrôle 15 permet un asservissement de la température dans la pièce intermédiaire 8. Ainsi, la circulation du fluide caloporteur est pilotée en fonction des mesures de température de la sonde de température 84 pour atteindre une température de consigne grâce à un algorithme d'asservissement de la température.

De manière analogue à ce qui a été décrit pour la pièce intermédiaire 8, le bloc de chauffe 7 comporte un dispositif de chauffe 71.

Le dispositif de chauffe 71 du bloc de chauffe 7 comporte un réseau de circulation de fluide caloporteur.

La machine 1, 1' comporte un deuxième dispositif de régulation de température 73 dans le bloc de chauffe 7 comprenant une deuxième sonde de température 74 dans le bloc de chauffe 7. L'unité de contrôle 15 permet un asservissement de la température dans le bloc de chauffe 7. Ainsi, la circulation du fluide caloporteur est pilotée en fonction des mesures de température de la sonde de température 74 pour atteindre une température de consigne grâce à un algorithme d'asservissement de la température.

Un procédé d'operculage au moyen d'une machine 1, 1' d'operculage comporte les étapes suivantes :
- régulation en température de la pièce intermédiaire 8 au moyen du premier dispositif de régulation de température 83,
- régulation en température du bloc de chauffe 7 à une température différente de la température de la pièce intermédiaire au moyen du deuxième dispositif de régulation en température 73,
- mise en place du contenant 3 dans la cloche inférieure 42,
- fermeture de l'enceinte, le film 2 étant pincé entre la cloche supérieure 41 et la cloche inférieure 42,
- mise sous vide de l'emballage, une pression inférieure à la pression atmosphérique est créée dans l'enceinte de part et d'autre du film 2,
- dans le cas d'un operculage sous atmosphère modifiée, injection d'un gaz protecteur,
- dans le cas d'un operculage de type « skin packaging », abaissement de la tête de scellage 5 juste au-dessus du film 2 et chauffe du film 2 par la pièce intermédiaire 8,
- dans le cas d'un operculage de type « skin packaging », introduction d'un gaz dans la cloche supérieure 41 pour augmenter la pression dans la portion de l'enceinte située au-dessus du film 2, la pression dans la portion de l'enceinte située au-dessous du film 2 étant maintenue inférieure à la pression dans la portion de l'enceinte située au-dessus du film 2, de sorte que le film 2 est plaqué jusqu'à être soudé thermiquement sur le produit et le contenant 3,
- dans le cas d'un operculage sous atmosphère modifiée et optionnellement dans le cas d'un operculage de type « skin packaging », abaissement de la tête de scellage en position de scellage pour permettre la soudure du film d'operculage sur les bords de l'emballage à operculer par application du rebord de soudure 43 pour pincer le film 2 et le contenant 3 le long du cordon de soudure entre le rebord de soudure 43 et la surface d'appui 60.
- remise à la pression atmosphérique de l'enceinte,
- remontée de la tête de scellage 5,
- ouverture de l'enceinte,
- extraction du contenant 3 hors de la cloche inférieure 42.

Pour l'operculage de type « skin packaging », la répartition de la température est choisie pour éviter la déformation du contenant grâce à une température modérée notamment en périphérie du contenant, tout en apportant un maximum de calories dans certaines zones du film localisées notamment à proximité du centre de la pièce intermédiaire. A titre illustratif, une consigne de 120°C est donnée pour le bloc de chauffe et une consigne de 180°C est donnée pour la pièce intermédiaire. Cette différence de température permet de protéger le contenant notamment lorsqu'il s'agit d'une barquette plastique.

Pour un operculage sous atmosphère modifiée, la température de la pièce intermédiaire est pilotée et régulée afin de ne pas détériorer le produit 31, 31'. A titre illustratif, une consigne de 140°C est donnée pour le bloc de chauffe 7 et une consigne de 0°C est donnée pour la pièce intermédiaire 8. Cette double régulation permet de limiter la rétraction du film, ainsi que les déformations du contenant.

La cloche inférieure 42 comporte une embase de soudure présentant un rebord de soudure 43 sur lequel reposent les bords du contenant 3 à operculer. Le rebord de soudure 43 présente une forme correspondant aux contours du format de contenants 3 à operculer. Le rebord de soudure 43 délimite un espace de réception du contenant à operculer. Dans la position fermée de l'enceinte 4 et lorsque la tête de scellage est en position de scellage, le rebord de soudure 43 coopère avec la surface d'appui 60 pour sceller le film 2 d'operculage sur un contenant 3.

La machine 1, 1' comporte en outre des moyens de mise sous atmosphère modifiée ou protectrice de l'intérieur du contenant 3. Ces moyens de mise sous atmosphère modifiée peuvent comprendre une pompe de mise sous vide ou une source de dépression et un injecteur de gaz protecteur.

Un organe de découpe est prévu pour découper le film après réalisation de la soudure thermique. L'organe de découpe comporte une lame de découpe 11, une rainure de découpe, un actionneur de la lame de découpe11. La lame de découpe 11 est mobile entre une position haute de repos représentée en figure 3 et une position basse de découpe représentée en figure 4.

La section qui suit met en évidence les différences entre la machine 1 des figures 1 à 5 et la machine 1' de la figure 6.

Dans la machine 1 des figures 1 à 5, la pièce intermédiaire 8 est une plaque plane s'étendant dans un plan horizontal. Elle est destinée à l'operculage de produits 31 non-dépassants et ne risque donc pas d'entrer en contact avec un produit 31.

Dans la machine 1' de la figure 6, la pièce intermédiaire 8 forme un dôme ménageant un espace libre délimité par une face inférieure 800 du dôme. L'espace libre permet de recevoir un produit 31' dépassant sans que la pièce intermédiaire 8 n'entre en contact avec le produit 31'.

Dans la machine 1', l'espace périphérique 91 comprend un amincissement 92 à proximité de la surface d'appui 60 de l'élément presseur 6. L'amincissement 92 permet d'éviter que le film 2 ne s'introduise dans la lame d'air d'isolation 9 et permet ainsi d'éviter toute déformation, tout déchirement ou tout pincement du film 2.

Dans la machine 1', la pièce intermédiaire 8 comporte, à proximité de son extrémité libre en vis à vis de l'élément presseur 6, une excroissance 80 qui comble au moins en partie l'espace périphérique 91 autour de l'élément presseur 6, réalisant ainsi l'amincissement 92 à proximité de la zone d'appui 60 de l'élément presseur 6. L'excroissance 80 est de forme tronconique et s'évase progressivement vers le bas jusqu'à jouxter la surface d'appui 60. Le dôme de la pièce intermédiaire 8 est ainsi évasé en partie inférieure.

A titre illustratif et nullement limitatif, l'excroissance 80 s'étend sur un quart de la hauteur de la pièce intermédiaire 8, en partie inférieure. La surface externe de la pièce intermédiaire 8 située au-dessus de l'excroissance 80 s'étend selon la direction axiale.

La surface externe de l'excroissance 80 de la pièce intermédiaire 8 est reliée à la face inférieure 800 du dôme par une arête. En variante, la surface externe de l'excroissance 80 de la pièce intermédiaire 8 est reliée à la face inférieure 800 du dôme par un arrondi. La face inférieure 800 du dôme présente en coupe transversale une forme sensiblement en S. La face inférieure 800 présente une portion sensiblement horizontale à proximité de l'arête commune avec la surface externe de l'excroissance 80, la portion sensiblement horizontale se prolonge par une portion convexe. La portion convexe de la face inférieure se prolonge ensuite par une portion concave formant le dôme.

En variante, l'amincissement 92 pourrait être réalisé au moins partiellement par une excroissance de l'élément presseur 6 qui comblerait en partie l'espace périphérique 91.

La machine 1, 1' permet de créer des zones de différentes températures dans la tête de scellage suivant les besoins des différents types d'operculage, operculage de type « skin packaging » ou operculage sous atmosphère modifiée, afin d'éviter la détérioration du contenant 3. Le procédé de l'invention permet également de maîtriser finement ces températures. La machine 1, 1' est ainsi polyvalente.

La machine 1, 1' et le procédé de l'invention, en permettant de créer des zones de températures différentes à proximité du contenant et de maîtriser finement ces températures permettent de répondre à des besoins générés par de nouvelles normes sanitaires et écologiques. Premièrement, la limitation de la température à proximité du produit permet de protéger le produit et d'éviter sa dégradation. Deuxièmement, pour des questions écologiques, l'épaisseur des films d'operculage et des contenants tels que les barquettes est réduite ce qui augmente les risques de déformation ou de détérioration sous l'effet de la chaleur. La lame d'air 9 permet une isolation intermédiaire afin de diminuer la température de la partie en contact avec le contenant 3 dans le but d'empêcher sa déformation, particulièrement pour les barquettes fragiles.

## Revendications

1. Machine (1, 1') d'operculage de contenants permettant de sceller thermiquement un film (2) d'operculage sur un contenant (3), en particulier pour un emballage de type « skin packaging » ou sous atmosphère modifiée de produits (31, 31') notamment alimentaires, la machine (1, 1') d'operculage comprenant :
- une enceinte (4) comportant une cloche supérieure (41) et une cloche inférieure (42) agencées pour être déplacées selon un axe principal vertical l'une par rapport à l'autre entre une position ouverte permettant la mise en place du contenant (3) dans la cloche inférieure (42) et la mise en place du film (2) entre la cloche inférieure (42) et la cloche supérieure (41), et une position fermée permettant l'operculage,
- une tête de scellage (5) montée dans la cloche supérieure (41) et comportant un élément presseur (6) comprenant une surface d'appui (60) agencée pour plaquer le film (2) sur un bord (30) du contenant (3) dans la position fermée de l'enceinte (4), un bloc de chauffe (7) agencé pour chauffer l'élément presseur (6) et une pièce intermédiaire (8) montée à l'interface entre le bloc de chauffe (7) et l'intérieur de l'enceinte (4),
- la tête de scellage (5) comporte des plots d'entretoise (93) fixant la pièce intermédiaire (8) sur la tête de scellage (5) de manière à ménager un espace occupé par un élément d'isolation thermique entre le bloc de chauffe (7) et la pièce intermédiaire (8),
la machine (1, 1') étant **caractérisée en ce que** :
- la pièce intermédiaire (8) comporte un dispositif de chauffe (81) ou un dispositif de refroidissement (82) tel qu'un réseau de circulation de fluide caloporteur,
- la machine (1, 1') comporte un premier dispositif de régulation de température (83) dans la pièce intermédiaire comprenant une première sonde de température (84) dans la pièce intermédiaire (8),
- la machine (1, 1') comporte un deuxième dispositif de régulation de température (73) dans le bloc de chauffe (7) comprenant une sonde de température (74) dans le bloc de chauffe (7).

2. Machine (1, 1') d'operculage selon la revendication 1 **caractérisée en ce que** l'élément d'isolation thermique est une lame d'air (9).

3. Machine (1, 1') d'operculage selon la revendication 2 **caractérisée en ce que** la lame d'air (9) comprend un espace principal s'étendant radialement, l'espace principal étant délimité en partie supérieure par une face inférieure du bloc de chauffe (7), en partie inférieure par une face supérieure de la pièce intermédiaire (8) et latéralement par une face interne de l'élément presseur (6).

4. Machine (1, 1') d'operculage selon la revendication 3 **caractérisée en ce que** la lame d'air (9) comprend un espace périphérique (91) délimité latéralement par une surface axiale interne de l'élément presseur (6) et une surface axiale externe de la pièce intermédiaire (8).

5. Machine (1') d'operculage selon la revendication 4 **caractérisée en ce que** l'espace périphérique (91) comprend un amincissement (92) à proximité de la surface d'appui (60) de l'élément presseur (6).

6. Machine (1') d'operculage selon la revendication 5 **caractérisée en ce que** la pièce intermédiaire (8) comporte, au voisinage de la surface d'appui (60), une excroissance (80) qui comble au moins en partie l'espace périphérique (91) autour de l'élément presseur (6), réalisant ainsi l'amincissement (92).

7. Machine (1') d'operculage selon la revendication 6, **caractérisée en ce que** l'excroissance (80) est de forme tronconique et s'évase progressivement vers le bas jusqu'à jouxter la surface d'appui (60).

8. Procédé d'operculage au moyen d'une machine (1, 1') d'operculage selon l'une quelconque des revendications 1 à 7, le procédé étant **caractérisé en ce qu'**il comporte les étapes suivantes :
- régulation en température de la pièce intermédiaire (8) au moyen du premier dispositif de régulation de température (83),
- régulation en température du bloc de chauffe (7) à une température différente de la température de la pièce intermédiaire (8) au moyen du deuxième dispositif de régulation en température (73),
- mise en place du contenant (3) dans la cloche inférieure (42),
- fermeture de l'enceinte, le film (2) étant pincé entre la cloche supérieure (41) et la cloche inférieure (42),
- création dans l'enceinte d'une atmosphère prédéterminée pour l'operculage,
- abaissement de la tête de scellage (5) et scellage du film sur le contenant (3),
- remise à la pression atmosphérique de l'enceinte, le cas échéant,
- remontée de la tête de scellage (5),
- ouverture de l'enceinte,
- retrait du contenant (3) de la cloche inférieure (42).

## Patentansprüche

1. Behälter-Deckelmaschine (1, 1') zum thermischen Abschließen einer Deckschicht (2) auf einem Behälter (3), insbesondere für Hautverpackungen oder modifizierte Atmosphärenverpackungen von Produkten (31, 31'), insbesondere Lebensmittel, besteht die Deckelmaschine (1, 1') aus:
- ein Gehäuse (4), das aus einer oberen Glocke (41) und einer unteren Glocke (42) besteht, die so angeordnet sind, dass sie entlang einer vertikalen Hauptachse zueinander zwischen einer offenen Position bewegt werden, sodass der Behälter (3) in die untere Glocke (42) und die Folie (2) zwischen der unteren (42) und der oberen Glocke (41) platziert werden kann, und eine geschlossene Position für das Decken,
- ein Dichtkopf (5), der in der oberen Glocke (41) montiert ist und aus einem Presselement (6) besteht, das aus einer Lagerfläche (60) besteht, die zum Pressen des Films (2) bis zu einem Rand (30) des Behälters (3) in geschlossener Position des Gehäuses angeordnet ist (4), einem Heizblock (7) zur Erhitzung des Presselements (6) und einem Zwischenteil (8), der an der Schnittstelle zwischen dem Heizblock (7) und dem Inneren des Gehäuses montiert ist (4),
- Der Dichtkopf (5) besteht aus Abstandsplatten (93), die den Zwischenteil (8) am Dichtkopf (5) so befestigen, dass zwischen dem Heizblock (7) und dem Zwischenteil (8) Raum von einem Wärmedämmelement eingenommen wird,
die Maschine (1, 1') wird dadurch charakterisiert:
- der Zwischenteil (8) besteht aus einem Heizgerät (81) oder einem Kühlgerät (82), wie z. B. einem Wärmeübertragungsflüssigkeitszirkulationsnetzwerk,
- Die Maschine (1, 1') besteht aus einem ersten Temperaturkontrollgerät (83) im mittleren Teil, das aus einer ersten Temperatursonde (84) im mittleren Teil (8) besteht,
- Die Maschine (1, 1') besitzt ein zweites Temperaturkontrollgerät (73) im Heizblock (7), einschließlich einer Temperatursonde (74) im Heizblock (7).

2. Die Deckelmaschine (1, 1') laut Anspruch 1 ist **dadurch gekennzeichnet, dass** das Wärmedämmelement ein Luftspalt (9) ist.

3. Die Deckelmaschine (1, 1') ist laut Behauptung 2 **dadurch gekennzeichnet, dass** der Luftraum (9) aus einem radial ausdehnenden Hauptraum besteht, wobei der Hauptraum im oberen Teil von einer Unterseite des Heizblocks begrenzt wird (7), im unteren Teil von einer oberen Seite des Zwischenteils (8) und seitlich von einer Innenfläche des Presselements (6).

4. Die Deckelmaschine (1, 1') laut Anspruch 3 ist **dadurch gekennzeichnet, dass** der Luftraum (9) aus einem peripheren Raum (91) besteht, der seitlich von einer inneren axialen Fläche des Presselements (6) und einer äußeren axialen Fläche des Zwischenteils (8) begrenzt ist.

5. Die Deckelmaschine (1') laut Anspruch 4 ist **dadurch gekennzeichnet, dass** der periphere Raum (91) eine Verdünnung (92) in der Nähe der Lagerfläche (60) des Presselements (6) umfasst.

6. Die Deckelmaschine (1') ist laut Behauptung 5 **dadurch gekennzeichnet, dass** der Zwischenteil (8) einen Auswüchs (80) in der Nähe der Lagerfläche (60) aufweist, der zumindest teilweise den peripheren Raum (91) um das Presselement (6) ausfüllt und so die Verdünnung (92) erreicht.

7. Die Deckelmaschine (1') laut Anspruch 6 zeichnet sich dadurch aus, dass der Vorsprung (80) konisch abgeschnitten ist und allmählich nach unten ausweitet, bis er an die Lagerfläche angrenzt (60).

8. Eine Methode des Deckels mittels einer Deckelmaschine (1, 1') gemäß einem der Ansprüche 1 bis 7, wobei das Verfahren dadurch charakterisiert wird, dass es die folgenden Schritte umfasst:
- Die Temperaturregelung des Zwischenraums (8) mittels des ersten Temperaturkontrollgeräts (83),
- Temperaturregelung des Heizblocks (7) bei einer Temperatur, die sich von der Temperatur des Zwischenraums (8) unterscheidet, mittels des zweiten Temperaturkontrollgeräts (73),
- Platzieren des Behälters (3) in die untere Glocke (42), - Schließen des Gehäuses, wobei der Film (2) zwischen der oberen (41) und der unteren Glocke (42) eingeklemmt wird,
- Schaffung einer vorgegebenen Atmosphäre für das Deckeln im Gehäuse,
- den Dichtungskopf (5) absenken und die Folie auf dem Behälter abschließen (3),
- Wiederherstellung der Kammer auf atmosphärischen Druck, falls zutreffend,
- Anheben des Dichtungskopfes (5),
- Öffnung des Gehäuses,
- Entfernung des Behälters (3) von der unteren Glocke (42).

## Claims

1. Container lidding machine (1, 1') for thermally sealing a lidding film (2) on a container (3), in particular for skin packaging or modified atmosphere packaging of products (31, 31'), in particular foodstuffs, the lidding machine (1, 1') comprising:
- an enclosure (4) comprising an upper bell (41) and a lower bell (42) arranged to be moved along a vertical main axis in relation to each other between an open position allowing the container (3) to be placed in the lower bell (42) and the film (2) to be placed between the lower bell (42) and the upper bell (41), and a closed position for lidding,
- a sealing head (5) mounted in the upper bell (41) and comprising a pressing element (6) comprising a bearing surface (60) arranged for pressing the film (2) to an edge (30) of the container (3) in the closed position of the enclosure (4), a heating block (7) arranged for heating the pressing element (6) and an intermediate part (8) mounted at the interface between the heating block (7) and the interior of the enclosure (4),
- the sealing head (5) comprises spacer pads (93) fixing the intermediate part (8) to the sealing head (5) in such a way as to provide space occupied by a thermal insulation element between the heating block (7) and the intermediate part (8),
the machine (1, 1') being **characterised in that**:
- the intermediate part (8) comprises a heating device (81) or a cooling device (82) such as a heat transfer fluid circulation network,
- the machine (1, 1') comprises a first temperature control device (83) in the intermediate part comprising a first temperature probe (84) in the intermediate part (8),
- the machine (1, 1') has a second temperature control device (73) in the heating block (7) including a temperature probe (74) in the heating block (7).

2. The lidding machine (1, 1') according to claim 1, **characterised in that** the thermal insulation element is an air gap (9).

3. The lidding machine (1, 1') according to claim 2 **characterised in that** the air space (9) comprises a radially extending main space, the main space being bounded in the upper part by an underside of the heating block (7), in the lower part by an upper face of the intermediate part (8) and laterally by an inner face of the pressing element (6).

4. The lidding machine (1, 1') according to claim 3, **characterised in that** the air space (9) comprises a peripheral space (91) laterally bounded by an internal axial surface of the pressing element (6) and an external axial surface of the intermediate part (8).

5. The lidding machine (1') according to claim 4, **characterised in that** the peripheral space (91) comprises a thinning (92) in the vicinity of the bearing surface (60) of the pressing element (6).

6. The lidding machine (1') according to claim 5 **characterised in that** the intermediate part (8) has an outgrowth (80) in the vicinity of the bearing surface (60) which at least partially fills the peripheral space (91) around the pressing element (6), thus achieving the thinning (92).

7. The lidding machine (1') according to claim 6, **characterised in that** the protrusion (80) is truncated conical in shape and gradually flares downwards until it adjoins the bearing surface (60).

8. A method of lidding by means of a lidding machine (1, 1') according to any one of claims 1 to 7, the method being **characterised in that** it comprises the following steps:
- temperature control of the intermediate room (8) by means of the first temperature control device (83),
- temperature control of the heating block (7) at a temperature different from the temperature of the intermediate room (8) by means of the second temperature control device (73),
- placing the container (3) in the lower bell (42),
- closing of the enclosure, the film (2) being pinched between the upper bell (41) and the lower bell (42),
- creation of a predetermined atmosphere for lidding in the enclosure,
- lowering the sealing head (5) and sealing the film on the container (3),
- restoration of the chamber to atmospheric pressure, if applicable,
- raising of the sealing head (5),
- opening of the enclosure,
- removal of the container (3) from the lower bell (42).
